# EUROPEAN PATENT APPLICATION

(11) **EP 3 705 845 A1**
(43) Date of publication of application: **09.09.2020**
(21) Application number: 19160781.1
(22) Date of filing: 05.03.2019
(51) Int. Cl.: G01C 21/20, G01C 21/36

(54) **A METHOD AND A SYSTEM FOR NAVIGATING A MOBILE USER EQUIPMENT**

(71) Applicant: Rohde & Schwarz GmbH & Co. KG, 81671 München (DE)
(72) Inventor: FISCHER, Dirk, 81369 München (DE)
(74) Representative: Isarpatent

(57) **Abstract**

A navigation system (1) for navigating a mobile user equipment, UE, carried by a user to a destination, said navigation system (1) comprising: at least one sign unit (3) adapted to communicate with said mobile user equipment, UE, (2) and a navigation unit (4) adapted to process map data to calculate a user individual direction from the sign unit (2) determined as being located close to a current position of the mobile user equipment, UE, (2) to the respective destination (DES), wherein the calculated user individual direction to the destination is displayed on a screen of said close sign unit (2).

## Description

The invention relates to a method and system for navigating a mobile user equipment using electronic sign units.

In huge buildings it is often difficult for a user to find a specific destination. For instance, a visitor of a huge building of an administration building or a factory may find it difficult to find his way to a specific destination. A visitor to a company looking for a specific room to meet another person in a meeting may have to ask other persons to find his way to the respective meeting room. Moreover, a visitor in a hospital may have to inquire for a shortest path to a destination for instance at an information desktop of the hospital at the main entry. With increasing size of the building it becomes more cumbersome for any visitor to find his destination. Consequently, the required time to reach the destination from the entry of the building does also increase. Moreover, a visitor may not be able to find a person who knows the floor map of the building well enough to give advice so that the visitor reaches the destination to late. Further, it is quite likely that another person might give wrong directions so that a visiting user may walk initially in a wrong direction. In conventional buildings direction signs are provided at walls to assist a user in finding directions within the building. These conventional direction signs indicate directions to rooms having associated room numbers. With increasing size of the building the number of the indicated rooms on the sign does also increase causing confusion for users. Further, these conventional direction signs are not adapted to individual needs of a visiting user. Consequently, in many scenarios a user will need a considerable period of time to reach the destination within the building. This can become critical in emergency situations where a visiting user such as a physician has to reach a specific room within the building in a very short time. For instance, a person requesting medical assistance needs to be reached by a medical doctor as soon as possible. In this case, if the assisting doctor has first to ask about the most direct way to reach the affected person, the long time required by him to reach the person does jeopardize the health of the respective person. Although a fireman has to reach a fire within a building as soon as possible before it can spread in the building.

Accordingly, it is an object of the present invention to provide a system and a method for navigating a user wearing a mobile user equipment most efficiently to a destination.

This object is achieved according to a first aspect of the present invention by a navigation system comprising the features of claim 1.

The invention provides according to a first aspect a navigation system for navigating a mobile user equipment to a destination,
said navigation system comprising:
at least one sign unit adapted to communicate with said mobile user equipment and a navigation unit adapted to process map data to calculate a user individual direction from the sign unit determined as being located close to a current position of the mobile user equipment to the respective destination,
wherein the calculated user individual direction to the destination is displayed on a screen of said close sign unit.

In a further embodiment of the navigation system according to the first aspect of the present invention the navigation unit has access to a memory unit which stores the map data processed by a processor of said navigation unit in response to destination data specifying the destination received by said navigation unit from the sign unit determined as being close to the mobile user equipment or received from the mobile user equipment.

In a further possible embodiment of the navigation system according to the first aspect of the present invention the map data stored in the data memory is updated automatically depending on the detected current position of the mobile user equipment.

In a further possible embodiment of the navigation system according to the first aspect of the present invention the sign unit and/or the mobile user equipment are adapted to determine a current distance between the location of the sign unit specified by the map data and the current position of the mobile user equipment.

In a further possible embodiment of the navigation system according to the first aspect of the present invention if the determined current distance between the current position of the mobile user equipment and the location of the sign unit specified by the map data is lower than a configurable or predetermined distance threshold, the respective sign unit forms a sign unit being in close proximity to the mobile user equipment and is triggered to display the calculated user individual direction to the destination on a screen of the sign unit.

In a further possible embodiment of the navigation system according to the first aspect of the present invention the navigation unit is adapted to communicate with the at least one sign unit directly or indirectly via the mobile user equipment.

In a further possible embodiment of the navigation system according to the first aspect of the present invention, the destination data specifying the destination is input by means of a user interface of the mobile user equipment or by means of a user interface of a terminal unit and communicated to the navigation unit processing the map data to calculate a user individual direction from a sign unit being located close to the current position of the mobile user equipment to the respective destination.

In a further possible embodiment of the navigation system according to the first aspect of the present invention, the destination data specifying the destination is generated automatically in response to a detected event and communicated to the navigation unit processing the map data to calculate user individual a direction from a sign unit being located close to the current position of the mobile user equipment to the respective destination.

In a further possible embodiment of the navigation system according to the first aspect of the present invention, the sign unit being located close to the current position of the user equipment is adapted to display a graphic symbol indicating a direction to the destination and/or to output assisting indications comprising an identifier of the destination, an identifier of the user of the mobile user equipment a distance between the sign unit and the destination and an identifier of the respective sign unit.

In a further possible embodiment of the navigation system according to the first aspect of the present invention, the displayed graphic symbol is graphically encoded depending on the destination and/or depending on the detected event and/or depending on a service offered by the respective user and/or depending on a service requested by the respective user and/or depending on user specific data, in particular the user's current or permanent mental or physical condition.

In a further possible embodiment of the navigation system according to the first aspect of the present invention, the mobile user equipment comprises a mobile phone adapted to run a navigation application to communicate with sign units and/or the navigation unit of said navigation system.

In a further possible embodiment of the navigation system according to the first aspect of the present invention, the mobile user equipment comprises a transponder carried by a user and configured depending on a service function offered by the respective user or requested by the respective user.

In a further possible embodiment of the navigation system according to the first aspect of the present invention, the mobile user equipment comprises a mobile test and/or measurement device adapted to run a navigation application to communicate with sign units and/or the navigation unit of said navigation system.

In a further possible embodiment of the navigation system according to the first aspect of the present invention, the sign unit comprises a screen adapted to display the calculated direction to the destination.

In a further possible embodiment of the navigation system according to the first aspect of the present invention, the sign unit is powered by a local power supply unit, in particular by a photovoltaic module.

The invention further provides according to a further aspect a method for navigating a mobile user equipment to a destination comprising the features of claim 15.

The invention comprises according to a second aspect a method for navigating a mobile user equipment to a destination, in particular to a destination within a building, the method comprising the steps of:
determining a sign unit as being located close to a current position of the mobile user equipment, calculating a direction from the location of the determined close display unit to the destination by processing map data and
displaying the calculated direction on a screen of said close sign unit.

In the following, possible embodiments of the different aspects of the present invention are described in more detail with reference to the enclosed figures.
- Fig. 1: shows a schematic diagram for illustrating a navigation system according to the first aspect of the present invention;
- Fig. 2: shows a flowchart of a possible exemplary embodiment of a method for navigating a mobile user equipment to a destination according to a further aspect of the present invention;
- Figs. 3, 4, 5: show schematically a communication between entities of the navigation system for different embodiments.
- Fig. 6: shows an example of user specific information displayed by a sign unit of the navigation system.
- Fig. 7: shows a block diagram of a possible exemplary embodiment of a sign unit used in the navigation system according to the present invention.

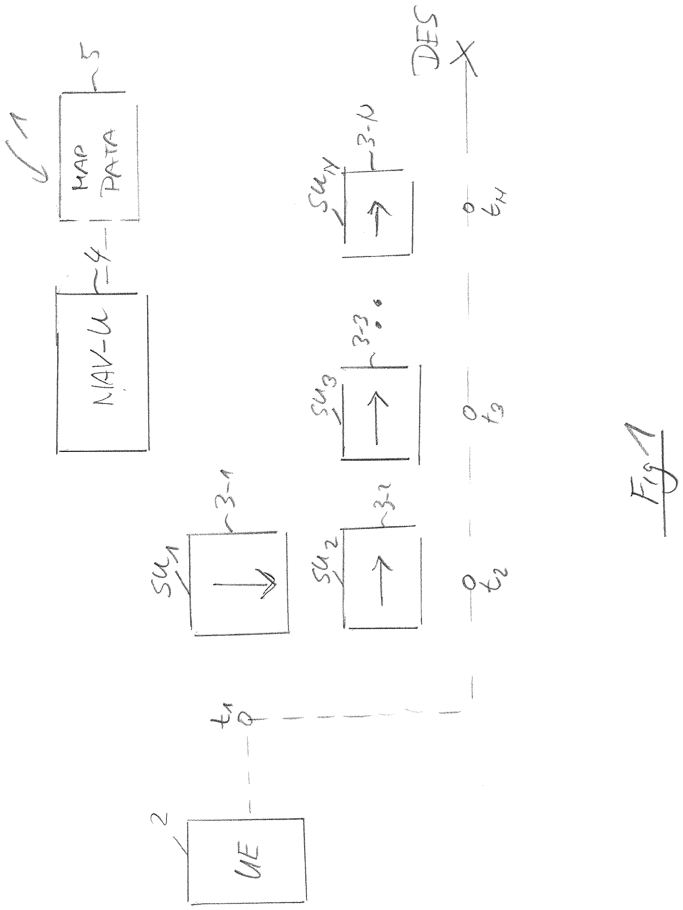

As can be seen from the schematic diagram of Fig. 1, the navigation system 1 according to the first aspect of the present invention can be used for navigating a mobile user equipment 2 to a destination DES.

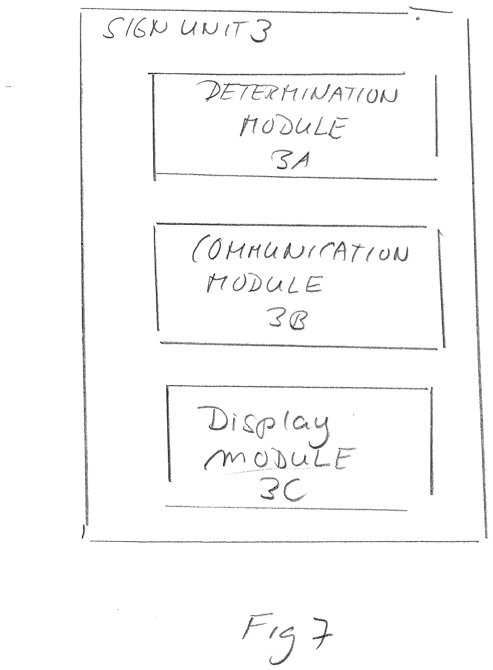

The navigation system 1 comprises one or more sign units 3-1, 3-2, 3-3, ... 3-n distributed in a predefined area such as a building. Fig. 7 shows a schematic block diagram of a possible embodiment of a sign unit 3. The navigation system 1 further comprises a navigation unit 4 adapted to process map data of the respective area to calculate a direction from a sign unit 3 determined as being located close to a current position of the mobile user equipment 2 to the respective destination DES. The direction calculated by the navigation unit 4 from the close sign unit 3-i to the destination DES can be displayed on a screen of a display module 3C of the respective close sign unit 3-i. Each sign unit 3-i of the navigation system 1 can be adapted to communicate by means of a communication module 3B with the mobile user equipment UE, in particular via a wireless communication link. Each sign unit 3-i can comprise in a possible embodiment a display or screen adapted to display the calculated direction to the destination DES. The sign unit 3-i can be powered in a possible embodiment by a local independent power supply unit, in particular by a connected photovoltaic module.

In a possible embodiment, the navigation unit 4 of the navigation system 1 can have access to a data memory 5 which stores map data of the area where the different configurable sign units 3-i are located. The navigation unit 4 comprises at least one processor adapted to process the map data in response to destination data specifying the respective destination DES. In a possible embodiment, the central navigation unit 4 receives the destination data specifying the destination DES from the sign unit 3-i having been determined as being close or even closest to the mobile user equipment UE 2. In a further possible embodiment, the central navigation unit 4 receives the destination data specifying the destination DES from the mobile user equipment 2. In a possible implementation, the map data stored in the data memory 5 can be updated automatically depending on the detected current position of the mobile user equipment 2. Further, in a possible embodiment, if a user equipment 2 approaches a building, map data of the respective building can be downloaded into the data memory 5 of the navigation system 1 from a remote database. In an alternative embodiment, the map data can also be downloaded to a data memory integrated in the mobile user equipment 2 for further processing by the processor of the central navigation unit 4. The sign unit 3 can comprise a determination module 3A to determine the physical presence of a mobile user equipment 2 in its vicinity, e.g. within a range of less than 10m, preferably in a range of less than 5m. The sign unit 3-i and/or the mobile user equipment 2 are adapted in a possible embodiment to determine a current distance between a location of the respective sign unit 3-i specified by the map data and the current position of the mobile user equipment 2. The current position of the mobile user equipment 2 can comprise coordinates of the mobile user equipment UE within a coordinate system. The current position of the user equipment can be determined by a position determination unit such as a GPS receiver or by other means such as triangulation. In a further alternative embodiment, the current position of the user equipment 2 can be determined by a detection unit of the sign unit 3-i being close or closest to the respective user equipment 2. If the determined current distance between the current position of the mobile user equipment 2 and the location of the sign unit 3-i specified by the map data is lower than a configurable or predetermined distance threshold, the respective sign unit 3 is classified in a preferred embodiment as a close sign unit 3 being located closely to the mobile user equipment UE (e.g. within a range of less than 10m). After having been classified as a close sign unit 3, the sign unit 3 displays the user individual direction calculated by a processor of the navigation unit 4 to the destination DES. The navigation unit 4 of the navigation system 1 is adapted to communicate with the different sign units 3-i directly. In a further possible embodiment, the navigation unit 4 of the navigation system 1 is adapted to communicate with the sign units 3-i only indirectly via the mobile user equipment UE. The navigation unit 4 can be implemented on a server connected to the sign units 3-i by means of a data network.

In a possible embodiment, the destination data specifying the destination DES can be input by means of a user interface of the mobile user equipment 2. In a further possible embodiment, the destination data specifying the destination DES can be input by means of a user interface of another terminal unit. This terminal unit can be for instance located at the destination DES. In a still further possible embodiment, the destination data specifying the destination DES are communicated to the central navigation unit 4 for processing the map data loaded from the map data memory 5 to calculate the direction from the sign unit 3 having been determined as being located close to the current position of the mobile user equipment 2 to the respective destination DES. The map data can comprise for example floor plan data of a building including rooms and technical installations within the building.

In a still further possible alternative embodiment, the destination data specifying the destination DES can be generated automatically in response to a detected event and communicated to the central navigation unit 4 which does process the map data to calculate the direction from a sign unit 3 having been determined as being located close to the current position of the mobile user equipment 2 to the respective destination DES. The event can be detected in a possible embodiment by evaluating sensor data generated by sensors which can be located at the respective destination DES. The event may be for instance a fire detected by a smoke sensor installed in a building.

In a possible embodiment, the sign unit 3 being located close to the current position of the user equipment 2 is adapted to display a graphic symbol indicating the calculated direction to the destination DES. This graphical symbol can be for instance an arrow as also illustrated in the embodiment of Fig. 1. The sign unit 3 can also be adapted to output assisting indications to the user of the user equipment 2 comprising for instance an identifier of the destination DES such as a room number, an identifier of the user of the mobile user equipment 2 such as the name of the user, a distance between the sign unit 3-i and the destination DES as well as an identifier of the respective sign unit 3-i such as a sign unit number. In a possible embodiment, the displayed graphic symbol such as an arrow can be graphically encoded depending on the destination DES and/or depending on a detected event. For instance, if the detected event is an emergency situation, the displayed graphical symbol can be formed by a red arrow. In contrast, if there is no emergency situation, the arrow can be displayed in green. Further assisting information can be encoded depending on the detected event and/or depending on user specific data which can be stored in a database of the navigation system (e.g. user data of staff members working in the building).

In a possible embodiment, the mobile user equipment 2 can comprise a mobile phone adapted to run a navigation application to communicate with the sign units 3-i and/or with the central navigation unit 4 of the navigation system 1. The mobile phone can comprise a smartphone having a display of its own. In a possible implementation, the graphical symbol displayed on the screen of the closest sign unit 3-i can also be displayed on the display of the mobile user equipment 2.

In a still further possible embodiment, the mobile user equipment 2 can comprise a transponder carried by a user. The transponder can be configured depending on a service function provided by the respective user. For instance, the transponder can be carried by an emergency physician or by a fireman. The central navigation unit 4 can be notified about the service function provided by the respective user carrying the user equipment 2 to calculate the direction or path to the destination DES matching the function of the respective user. For instance, if a fire has been detected by a sensor within a building, a fireman carrying the transponder is directed or navigated automatically by the navigation system 1 to the destination DES where fire has been detected. In contrast, if the user carrying the transponder is a medical doctor or physician, he can be navigated to the room where the affected person or patient is currently located. Users of different functions can be navigated automatically along most fitting paths as indicated by the sign units 3-i. For instance, a physician may be navigated along a first path to a destination DES whereas a fireman is navigated to the same destination DES along another path. The user can also be for example a patient within a hospital who is navigated by the navigation system 1 according to the present invention to a specific room within the hospital, for example to perform a specific kind of diagnostic investigation or medical treatment. Further, the user can also be a visitor to a company who is navigated automatically to a room of the visited person of the visitor's working.

The mobile user equipment 2 can also comprise a mobile test and measurement device adapted to run a navigation application to communicate with sign units 3-i and/or the central navigation unit 4 of the navigation system 1. For instance, a service technician carrying a mobile test and measurement device 2 may be navigated or directed directly to a machine within a factory to perform necessary test and/or measurement procedures.

In the illustrated example of Fig. 1, the mobile user equipment 2 of the user comes at time t1 close to a first configurable sign unit 3-1 which displays the direction to the destination DES which is within a building. The user can follow the indicated direction and approaches at time t2 to a second sign unit 3-2 as illustrated in Fig. 1 which indicates also by means of a graphical symbol such as an arrow the direction to the destination DES. In this way, the user carrying the mobile user equipment 2 can follow the indicated signs at different time points t3...tn until the user reaches the destination DES. As soon as the mobile user equipment 2 comes close to the location of a sign unit 3-i, the graphic direction arrow is automatically displayed assisting the user to reach the destination DES on the fastest track. In a possible embodiment, after having left a predetermined range around a sign-unit 3-i, the displayed graphic symbol can vanish from the display of the sign unit 3-i.

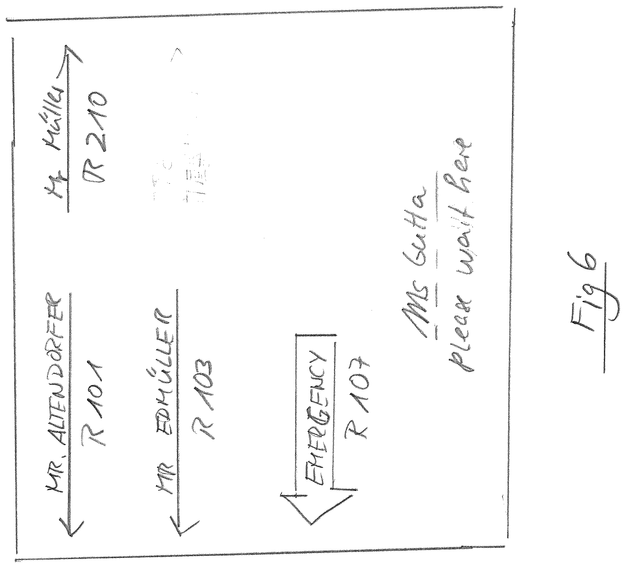

In a possible embodiment, the user of the mobile user equipment 2 receives a feedback from the navigation system 1 that the displayed indication to the destination DES is addressed to him, e.g. by also displaying the name of the user on the screen of the sign unit 3-i as illustrated in Fig. 6. When reading his name on the same screen where the direction arrow is displayed, the respective user becomes aware that the indicated direction is intended for him and not for another person.

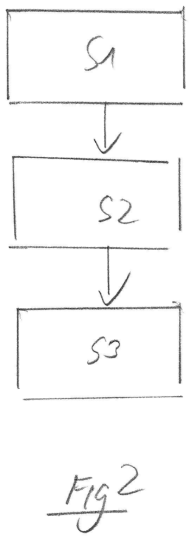

Fig. 2 shows a flowchart of a possible exemplary embodiment of a method for navigating a mobile user equipment 2 to a destination DES.

In the illustrated embodiment, the method comprises three main steps.

In a first step S1, the sign unit 3-i is determined as being located close to a current position of the respective mobile user equipment 2. In a possible embodiment, the current position of the mobile user equipment 2 is determined by a position determination unit of the user equipment 2. In a further possible embodiment, the current position of the mobile user equipment 2 can also be determined by a determination entity of the sign unit 3-i, e.g. by determining the presence within a predetermined range of the sign unit 3-i. In a further possible embodiment, the current position of the mobile user equipment UE can also be tracked by another entity of the navigation system 1 such as position sensors of the navigation system 1. The sign unit 3 can be determined as being close to the current position if a distance between the mobile user equipment UE and the location of the sign unit 3 is beneath a predetermined distance threshold, e.g. beneath 10 meters.

In a further step S2, a direction from the location of the determined close display unit 3-i to the destination DES is calculated by processing map data which can be stored in a data memory. The calculation can be performed in a possible embodiment by a processor of a central navigation unit 4 of the navigation system 1. The direction to be followed by the user to reach his destination is calculated individually for the user carrying the mobile user equipment, UE, 2. The direction can be calculated depending on user specific data comprising a service offered or requested by the user, a momentary or permanent physical or mental condition of the user, in particular physical or mental handicaps, as well as languages and alphabets known by the user.

In a further step S3, the calculated direction is displayed by the respective close sign unit 3-i. The calculated direction can be displayed as a graphical symbol on a screen of the sign unit 3-i. The sign unit 3-i can further output assisting indications comprising an identifier of the destination (such as a room number), an identifier of the user of the mobile user equipment 2 (such as a name of the user), a distance between the sign unit 3-i and the destination DES as well as an identifier of the respective sign unit 3-i.

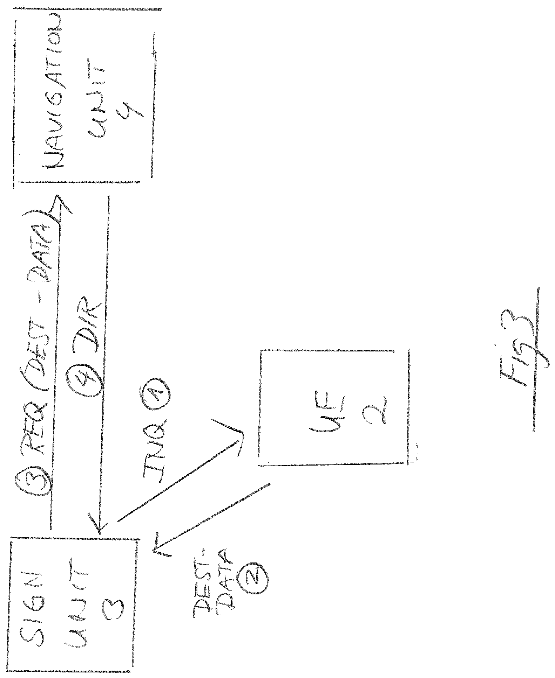

Figs. 3 to 5 illustrate different possible exemplary embodiments of the navigation system 1 according to the first aspect of the present invention.

In the illustrated embodiment of Fig. 3, the sign unit 3-i comprises the active component of the system 1 communicating both with the user equipment 2 and the navigation unit 4. In the illustrated embodiment, the sign unit 3 can monitor the area around the sign unit 3, i.e. its surrounding with a detection range, to determine whether any user equipment 2 is in the vicinity of the sign unit 3. As soon as a detection unit of the sign unit 3 has detected the presence of a user equipment 2 in the vicinity of the sign unit 3, the sign unit 3 can transmit an inquiry INQ to the user equipment 2, e.g. via a wireless communication link, whether the user of the mobile user equipment 2 is looking for a specific destination DES or not. In a preferred embodiment, the sign unit 3 communicates with the navigation application executed by processing means of the mobile user equipment 2 to exchange information with the configurable sign unit 3. In the illustrated embodiment, the sign unit 3 sends the inquiry INQto the mobile user equipment 2 to get destination data specifying the destination DES of the mobile user equipment 2. The navigation application executed by the mobile user equipment 2 returns in the illustrated embodiment destination data DEST-DATA to the sign unit 3 specifying the respective destination DES. In the illustrated embodiment of Fig. 3, the sign unit 3 forwards the destination data DEST-DATA to the central navigation unit 4 to get the direction to the specified destination DES. In the illustrated embodiment, the sign unit 3 forwards a request REQ to the central navigation unit 4 to get the direction for the destination DES specified by the destination data DEST-DATA. The navigation unit 4 calculates on the basis of the map data and the received destination data DEST-DATA a direction or a path from the sign unit 3 to the respective destination DES and returns the calculated direction DIR to the sign unit 3 as illustrated in Fig. 3. Depending on the received direction DIR, the sign unit 3 can display in a possible embodiment a graphic symbol on its display screen showing the user of the mobile user equipment 2 how to move on to reach the respective destination DES.

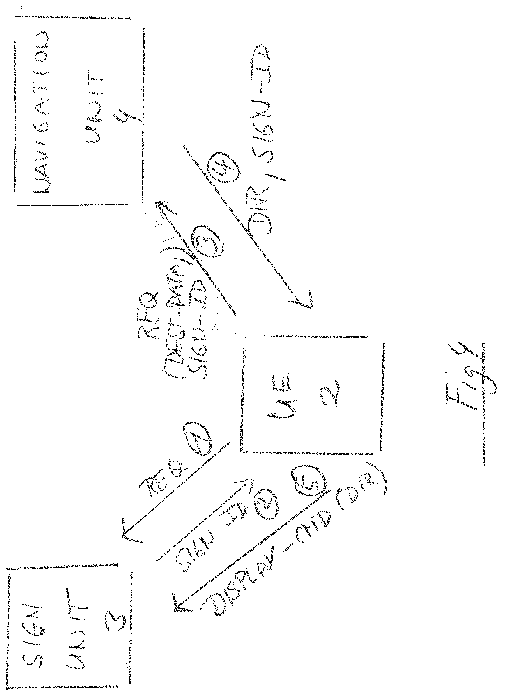

Fig. 4 illustrates a further exemplary embodiment of the navigation system 1 according to the present invention. In the illustrated embodiment of Fig. 4, the mobile user equipment 2 forms the active component of the navigation system 1 communicating both with the sign unit 3 and with the central navigation unit 4 of the navigation system 1. In the illustrated embodiment of Fig. 4, the user equipment 2 determines at least one close sign unit 3 being located closely to the current position of the mobile user equipment 2. In a possible implementation, a closest sign unit 3 may provide the highest wave reflection of a signal broadcasted by an antenna of the user equipment 2. A search request REQ of the mobile user equipment 2 can trigger a reaction in the closest sign unit 3 to return its sign ID in response to the received search request REQ to the inquiring user equipment 2 as illustrated in Fig. 4. After having received the sign identifier of the sign unit 3, the user equipment 2 forwards the returned sign identifier of the sign unit 3 to the central navigation unit 4 as illustrated in Fig. 4. The user equipment 2 forwards along with the sign identifier destination data DEST-DATA specifying the intended destination DES of the user equipment 2. The processor of the navigation unit 4 processes the received destination data DEST-DATA on the basis of stored map data and the location of the sign unit 3 specified by the received sign identifier to calculate a direction DIR from the location of the respective sign unit 3 to the destination DES specified by the destination data DEST-DATA. The central navigation unit 4 transmits the calculated direction along with the sign identifier to the user equipment 2 as illustrated in Fig. 4. The user equipment 2 forwards the received direction DIR to the close sign unit 3 and requests to display the forwarded direction calculated by the navigation unit 4 on the screen of the sign unit 3. After having received a display command DISPLAY-CMD from the user equipment 2 to display the received direction, the sign unit 3 displays the received direction on its screen.

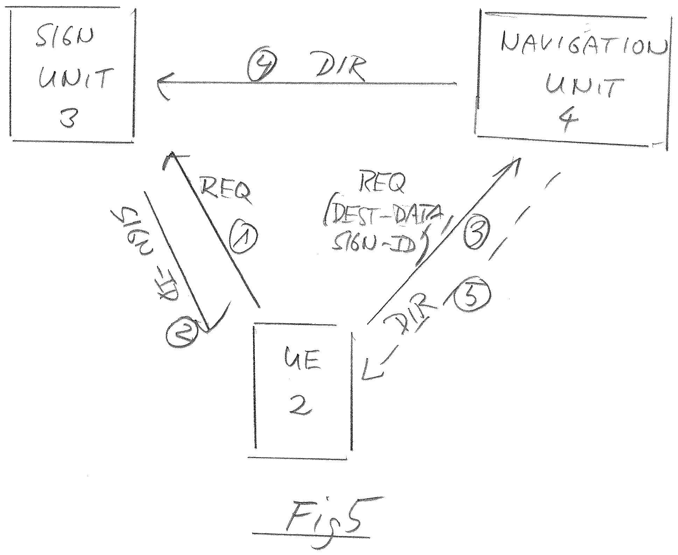

Fig. 5 shows a further possible exemplary embodiment of a navigation system 1 according to the first aspect of the present invention. In the illustrated embodiment of Fig. 5, the user equipment 2 is partly active. Similar to the embodiment of Fig. 4, the user equipment 2 first sends a search request REQ to find the nearest sign unit 3. The nearest sign unit 3 may provide the highest wave reflection to a signal transmitted by an antenna of the user equipment 2. The sign unit 3 returns its sign identifier in response to the received search request REQ as illustrated in Fig. 5. Further as in the embodiment of Fig. 4, the user equipment 2 supplies the sign identifier of the sign unit 3 to the navigation unit 4 along with destination data DEST-DATA specifying the destination DES. The navigation unit 4 then transmits the calculated direction DIR directly to the sign unit 3 indicated by the received sign identifier. The sign unit 3 having received the direction DIR from the navigation unit 4 displays the received direction DIR on its display screen so that the user of the user equipment 2 can follow the displayed direction. In a further possible embodiment, the navigation unit 4 can also transmit the calculated direction to the user equipment 2 to be displayed by a display unit of the user equipment 2 to the user. In this embodiment, the user can track the direction to the destination DES by looking at the display screen of the sign unit 3 or by looking at the display of the user equipment 2.

The navigation system 1 according to the present invention allows a user to find and reach a destination DES in a minimum time period which is essential in particular in an emergency situation. A user can conveniently find and reach any destination within an area covered by the stored map data. A user looking for his way within a huge building such as a public office can easily find his destination DES without making inquiries at other persons. The destination DES can be input by the user into the mobile user equipment 2 or can be determined in response to detected events. Further, the destination DES can be input by means of another terminal unit by another user. For example, a doctor may indicate the destination DES of a specific room in a hospital where the user carrying the user equipment 2 has to go to perform an diagnostic investigation. There is a wide variety of different use cases where the navigation system 1 according to the present invention can be used. The navigation system 1 according to the present invention can also be used by service technicians carrying equipment as mobile user entities 2 within a factory or building. A further use case is a user entering a public administration building or site of a huge company having a plurality of different rooms R. The different sign units 3-i of the navigation system 1 according to the present invention can provide individual indications or directions for the respective user carrying the mobile user equipment 2. For instance, a sign unit 3 can display several graphical symbols for different directions simultaneously to several users standing in front of the same sign unit 3 wherein each direction is labeled with the name or identifier of the respective user. Accordingly, a sign unit 3 may show a first user to go to the left side and simultaneously another user to go to the right side as also illustrated in the example of Fig. 6. The destination data can be input in different ways. In a possible embodiment, a QR code of the destination can automatically be detected by a camera of the user equipment 2 to derive destination data specifying the respective destination DES. The destination data can also be input by means of speech recognition. The indications displayed on the screen of a sign unit 3 can be changed dynamically depending on the user equipment 2 approaching the respective sign unit 3 and/or the destination data specifying the destination DES. In a possible embodiment, the destination data can be updated dynamically depending on different factors including the time when the user equipment 2 enters the area of the navigation system 1 and approaches a sign unit 3-i. For instance, a user carrying a user equipment 2 at daytime can be navigated to another destination than a user approaching the same sign unit 3 at night. Further, the destination data can be updated dynamically depending on the availability of persons providing services to the user carrying the user equipment 2. For instance, a user entering a huge administrative building providing a specific service by officials working in different rooms of the building can be directed or navigated dynamically to an official who is not occupied with another customer or user. For instance, a user requiring a specific service such as registering his home address on a public register can input the requested service. Depending on the input service, the location of an unoccupied official who can provide the respective registration service can be determined to provide destination data forming the basis for calculating the direction to the respective destination DES. Accordingly, the destination DES can be derived in a possible embodiment depending on a type of input service request.

The different sign units 3-i of the navigation system 1 can in a possible implementation be configurable depending on the use case. For instance, graphic symbols indicating the direction to the destination can be configured for different use cases, e.g. a red arrow for an emergency situation or a green arrow for a normal visit in a building. Further, it can be configured any kind of additional indication data assisting the user as displayed on the screen of the sign unit 3. In a possible embodiment, the configurable sign units 3-i are placed within a huge building such as a public building or a public transportation system. In a further possible embodiment, the navigation system 1 according to the present invention can monitor dynamically the number of users following a certain direction displayed by the sign units 3-i to a destination DES that may recalculate the direction for other users depending on the monitored number of users having already taken the respective direction or path. For instance, if a high number of users has already taken the path to the destination DES as illustrated in Fig. 1, the navigation unit 4 can direct following users approaching e.g. the first sign unit 3-1 via another path to the same destination DES to avoid bottlenecks within a building. Accordingly, the navigation system 1 according to the present invention can also be used for crowd control of a plurality of users within an area such as a transportation system. After having reached the destination, a user carrying a user equipment 2 can be redirected or renavigated by the navigation system 1 back to an initial position, e.g. for the main entry of a huge building.

In a possible embodiment, the navigation unit 4 monitors whether the user equipment 2 follows the displayed direction to the destination DES and in case that the user goes erroneously into a wrong direction the system sends a corresponding notification message to the user equipment 2 which may trigger an alarm sound output by a loudspeaker of the user equipment 2.

Further embodiments of the navigation system 1 are possible. In a possible embodiment, the user equipment 2 can supply the close sign unit 3 on request with specific information data about the user of the respective user equipment 2. Further, the user information can comprise data about the type of user carrying the user equipment. The user specific data transmitted to the sign unit 3 and/or the navigation unit 4 can indicate a service offered by the respective user, e.g. a maintenance service, a medical assisting service or a fire fighting service. The user information can be evaluated to derive fitting destination data. The user specific data supplied to the sign unit 3 and/or the central navigation unit 4 can comprise further information about the user, e.g. his physical abilities, alphabets known to the user or his language capabilities. For instance, a handicapped user is not able to climb steps and will be directed to an elevator instead to a staircase to reach his destination. A user having a handicapped view may get the directions and the assisting informations in huge letters so that he can read the indications. Further, for example a Chinese person will get the indications in Chinese letters whereas another user may get the indications in the Arabic alphabet. Accordingly, the direction and the assisting information is individually adapted to the individual physical and mental requirements of the user wearing the mobile user equipment 2 being in close proximity to the respective sign unit 3 of the navigation system 1. Further, if the navigation system 1 finds that the user wearing the mobile user equipment 2 is blind and cannot see any directions indicated on the screen, it may trigger an assisting acoustic message output by a loudspeaker attached to the sign unit 3 or transmitting the information to the navigation application executed by the user equipment 2 to trigger an acoustic message output by a loudspeaker of the user equipment 2. Accordingly, in a possible embodiment the navigation system 1 according to the present invention can evaluate a current or permanent health condition of the user to adapt the output directions and/or assisting information to the current or permanent health condition of the respective user.

Fig. 7 shows a possible exemplary embodiment of a sign unit 3 which can be used in a navigation system 1 according to the present invention. The sign unit 3 comprises a determination unit 3A adapted to determine the physical presence of at least one module user equipment 2 in its vicinity, e.g. within a detection range of less than 10m. The determination unit 3A can comprise also a near-field sensor which can be approached by a handheld user equipment 2 such as a mobile phone or a transponder carried by the user providing a smaller detection range of less than 10m. Different determination mechanisms can be used, e.g. a pilot signal broadcasted by the sign unit 3 to be detected by a close user equipment 2 executing a navigation application to return an acknowledgement signal to the sign unit 3. The pilot signal can be a radio signal or an acoustic signal captured by a microphone of the user equipment 2 (preferably in a not audible frequency range). The communication module 3B can comprise a transceiver to exchange data and/or messages with the mobile user equipment 2. The display module 3C comprises a display or screen to display a user individual direction and assisting information.

The navigation system 1 according to the present invention comprises a system suitable for any buildings or building assemblies such as a hospital, factory, office building, university, school, station, sport facility or prison or any facility where users walk around to find their specific destinations.

## Claims

1. A navigation system (1) for navigating a mobile user equipment, UE, carried by a user to a destination,
said navigation system (1) comprising:
at least one sign unit (3) adapted to communicate with said mobile user equipment, UE, (2) and
a navigation unit (4) adapted to process map data to calculate a user individual direction from the sign unit (3) determined as being located close to a current position of the mobile user equipment, UE, (2) to the respective destination (DES),
wherein the calculated user individual direction to the destination is displayed on a screen of said close sign unit (3).

2. The navigation system according to claim 1 wherein the navigation unit (4) has access to a memory unit (5) which stores the map data processed by a processor of said navigation unit (4) in response to destination data specifying the destination (DES) received by said navigation unit (4) from the sign unit (3) determined as being close to the mobile user equipment, UE, (2) or received from the mobile user equipment, UE, (2).

3. The navigation system according to claim 1 or 2 wherein the map data stored in the data memory (5) is updated automatically depending on the detected current position of the mobile user equipment, UE, (2).

4. The navigation system according to any of the preceding claims 1 to 3 wherein the sign unit (3) and/or the mobile user equipment, UE, (2) are adapted to determine a current distance, D, between the location of the sign unit (3) specified by the map data and the current position of the mobile user equipment, UE, (2).

5. The navigation system according to claim 4 wherein if the determined current distance, D, between the current position of the mobile user equipment, UE, (2) and the location of the sign unit (3) specified by the map data is lower than a configurable or predetermined distance threshold, the respective sign unit (3) forms a sign unit being close to the mobile user equipment, UE, (2) and is triggered to display the calculated direction to the destination on a screen of the sign unit (3).

6. The navigation system according to any of the preceding claims wherein the navigation unit (4) is adapted to communicate with the at least one sign unit (3) directly or indirectly via the mobile user equipment, UE, (2).

7. The navigation system according to any of the preceding claims 1 to 6 wherein the destination data specifying the destination is input by means of a user interface of the mobile user equipment, UE, (2) or by means of a user interface of a terminal unit and communicated to the navigation unit (4) processing the map data to calculate a direction from a sign unit (3) being located close to the current position of the mobile user equipment, UE, (2) to the respective destination.

8. The navigation system according to any of the preceding claims 1 to 6 wherein destination data specifying the destination is generated automatically in response to a detected event and communicated to the navigation unit (4) processing the map data to calculate a user individual direction from a sign unit (3) being located close to the current position of the mobile user equipment, UE, (2) to the respective destination.

9. The navigation system according to any of the preceding claims 1 to 8 wherein the sign unit (3) being located close to the current position of the user equipment, UE, (2) is adapted to display a graphic symbol indicating a direction to the destination and/or to output assisting indications comprising an identifier of the destination, an identifier of the user of the mobile user equipment, UE, (2) a distance between the sign unit (3) and the destination and an identifier of the respective sign unit (3).

10. The navigation system according to claim 9 wherein the graphic symbol and/or assisting indications are encoded depending on the destination and/or depending on the detected event and/or depending on a service offered by the respective user or depending on a service requested by the respective user and/or depending on user specific data, in particular the user's current or permanent mental or physical condition.

11. The navigation system according to any of the preceding claims 1 to 10 wherein the mobile user equipment, UE, (2) comprises a mobile phone adapted to run a navigation application to communicate with sign units (3) and/or the navigation unit (4) of said navigation system (1).

12. The navigation system according to any of the preceding claims 1 to 10 wherein the mobile user equipment, UE, (2) comprises a transponder carried by a user and configured depending on a service function offered by the respective user or requested by the respective user.

13. The navigation system according to any of the preceding claims 1 to 10 wherein the mobile user equipment, UE, (2) comprises a mobile test and/or measurement device adapted to run a navigation application to communicate with sign units (3) and/or the navigation unit (4) of said navigation system (1).

14. The navigation system according to any of the preceding claims 1 to 13 wherein the sign unit (3) comprises a screen adapted to display the calculated user individual direction to the destination and a local power supply unit.

15. A method for navigating a mobile user equipment, UE, (2) carried by a user to a destination location of the user,
the method comprising the steps of:
(a) determining (S1) a sign unit (3) being located close to a current position of the mobile user equipment, UE, (2);
(b) calculating (S2) a user individual direction from the location of the determined close display unit (3) to the destination by processing map data and
(c) displaying (S3) the calculated user individual direction on a screen of said close sign unit (3) to the user.

16. A sign unit (3) used for navigating a mobile user equipment, UE, (2), carried by a user,
said sign unit (3) comprising:
a determination module (3A) adapted to determine the presence of a user equipment, UE, (2) in the vicinity of the sign unit (3);
a communication module (3B) for communication with the user equipment, UE, (2) and/or with a navigation unit (4) to get a user individual direction to be followed by the user from the location of the sign unit (3) to a destination location of the user; and
a display module (3C) adapted to display the calculated user individual direction.
